(19) Europäisches Patentamt / European Patent Office / Office européen des brevets

(11) **EP 2 685 652 A1**

(12) **EUROPEAN PATENT APPLICATION**

(43) Date of publication:
**15.01.2014 Bulletin 2014/03**

(51) Int Cl.:
**H04J 14/02** (2006.01)

(21) Application number: **12176394.0**

(22) Date of filing: **13.07.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Nokia Solutions and Networks Oy 02610 Espoo (FI)**

(72) Inventors:
• **Rohde, Harald**
  **81673 München (DE)**
• **Pulverer, Klaus**
  **81829 München (DE)**

(74) Representative: **Lucke, Andreas et al**
  **Boehmert & Boehmert**
  **Pettenkoferstrasse 20-22**
  **80336 München (DE)**

(54) **Flexible and economic Metro / Access Ring architecture**

(57)    An optical fiber ring having a plurality of passive ring nodes and an active ring node with a switch to interrupt or close the fiber ring, wherein the passive ring nodes are configured to connect an optical feeder section to each direction of the fiber ring and wherein arbitrary wavelengths signals generated in a feeder section can be distributed to all other ring nodes and feeder sections and wherein receivers in the feeder sections are configured to select an arbitrary number of wavelength signals in receiving direction.

## Fig.2

## Description

## FIELD OF THE INVENTION

The invention relates to an optical communication system and to a method for passive signal distribution in optical metro and access networks.

## BACKGROUND OF THE INVENTION

Fiber optical metropolitan networks are usually arranged in a ring topology. Such a ring topology ensures a good compromise of cost/complexity and protection against failures, e.g. fiber cuts. In case of a fiber cut, the traffic can always be routed in the reverse direction and still reaches its target in the ring. The problem is how to connect the network nodes to the ring in the most economical way.

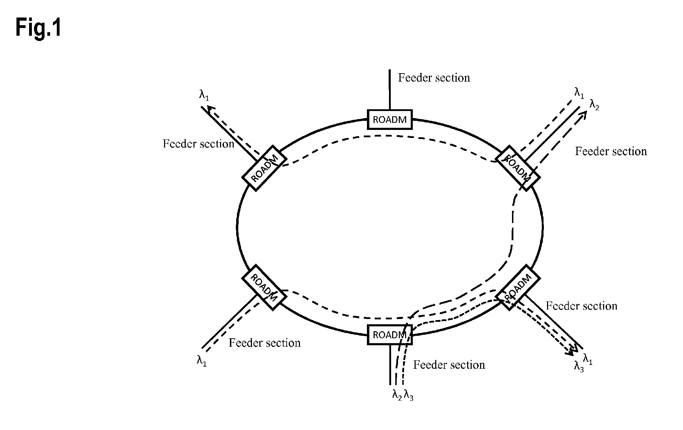

In current metropolitan fiber networks, a fiber ring topology and so called Reconfigurable Add Drop Multiplexers (ROADMs) as illustrated in Fig. 1 are prior art. A ROADM is able to drop one or more wavelengths or a wavelength band from the fiber optical ring and to add other wavelengths or wavelength bands. Passive add-drop multiplexers (OADMs) are also used, the difference is that ROADMs are remotely configurable, simplifying the management of a metropolitan ring.

In order to minimize optical losses, a ROADM usually includes an optical fiber amplifier, e.g. an Erbium Doped Fiber Amplifier (EDFA). This architecture works well and is well proven, but unfortunately, ROADMS and EDFAs are quite expensive. Wavelengths are generated and terminated in the feeder sections of the ring, as shown in Fig. 1. Each feeder section typically contains only one wavelength and a broadband photodiode; the selection which wavelength is distributed to which feeder section is done by the ROADM. If more than one wavelength is present on one feeder section, filtering has to be employed at the receivers.

A key issue of today's metropolitan rings is the adding and dropping of signals having a specific wavelength at network nodes along the ring. A signal having a specific wavelength must not circle the whole ring, to avoid interference by time-delayed repetitions of the same signal. In view of each particular wavelength, the ring thus represents a bus structure. In this bus structure a wavelength signal is generated at a fixed point, say a network node within the ring, and terminated at one or multiple different fixed points, say network nodes along the ring. Termination means, that the terminated wavelength signal is dropped at this ring node and is not sent to the next ring node. In consequence, particular wavelengths can be re-used in non-overlapping segments of the ring for different signals.

This has the following consequences:

- Substantial planning and management of a ring is required, in particular if the configuration is to be changed dynamically.
- The usage of active elements such as ROADMS and EDFAs is very expensive.
- The cost and complexity of ROADMS increases with the number of different wavelengths used on the ring. This limits flexibility, for example if separate wavelengths are being associated to different services, resulting in a large total number of wavelengths.

The problem to be solved is to overcome the disadvantages stated above and in particular to provide appropriate solutions by the present invention

## BRIEF DESCRIPTION OF THE DRAWINGS

The invention is explained by way of example in more detail below with the aid of the attached drawings.

Fig. 1 is a schematic representation of a state of the art metropolitan fiber ring employing ROADMs. Its operation is illustrated by several wavelengths which are coupled into and dropped from the ring at different ROADMs. The different wavelengths are depicted as $\lambda_1$, $\lambda_2$ and $\lambda_3$ in the figure. Please note that some wavelengths, in this example $\lambda_1$, may be used more than once in the ring.

Fig. 2 is a schematic representation of a fiber optical ring architecture according to the invention. It shows a number of passive distribution nodes (details see fig. 4), and one fiber optical switch (details see fig. 6 and fig. 7), used for protection.

Fig. 3 shows an example of use cases of a fiber optical metro distribution ring which is according to the invention. The ring can, amongst other services, support Mobile Backhaul (MBH), Enterprise and Passive Optical Networks (PON) for residential access. The Optical Line Terminal (OLT) and the Optical Network Units (ONUs) may be connected at different distribution nodes, and Remote Radio Heads (RRH) may be connected with a Baseband Hotel (BH) for Mobile Backhauling (MBH) services.

Fig.4 is a schematic representation of the structure of a distribution node, as specified in this invention. The node is made up entirely of passive optical splitters.

Fig.5 is a schematic representation and an example of how automatic protection switching can be performed within the ring architecture according to this invention, in case of a fiber cut.

Fig.6 is a schematic representation of an example of a switch which can be used to detect fiber cuts.

Fig.7 is a schematic representation of a further example of a switch which can be used for detecting fiber cuts.

## DESCRIPTION OF THE INVENTION

The invention represents a new architecture, consisting of a fiber based ring structure, distribution nodes and a fiber optical switch.

The fiber ring structure is a single fiber bi-directional ring, being different from state-of-the-art rings which are dual fiber unidirectional. Of course, several such fiber rings, according to the invention, can be placed in parallel in the same ducts in order to increase bandwidth further. A previously existing legacy ROADM based dual fiber ring can be upgraded according to this invention to two independent fiber rings with the same capacity, thus doubling overall capacity.

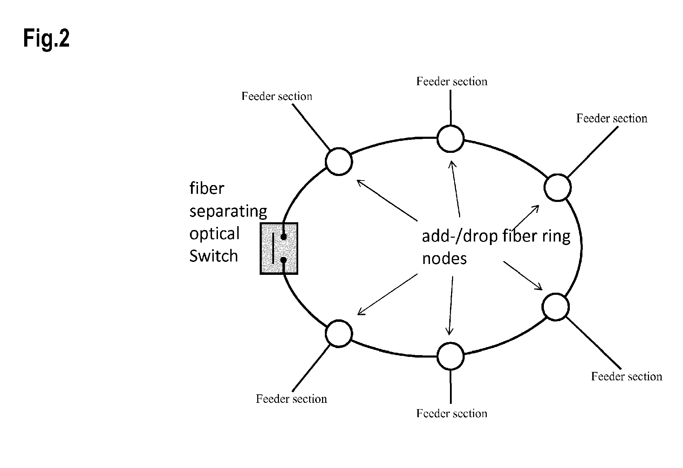

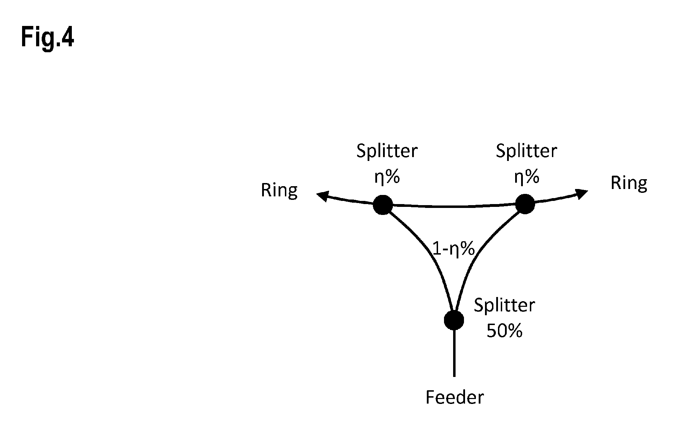

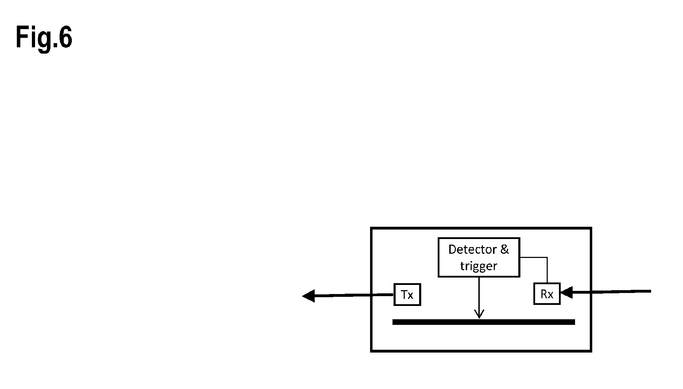

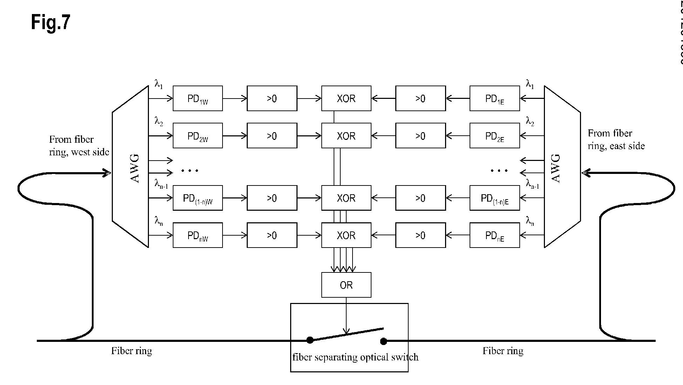

On the fiber optical metropolitan ring, all ROADMs are replaced by passive splitter-based distribution nodes according to Fig. 4. To avoid interference, a single fiber optical switch within the ring is added with a detection unit which is able to detect a fiber cut in the ring at any position. This is the only active element on the ring. The fiber optical switch is normally open to interrupt the fiber ring and connects automatically the fiber in the ring in case a fiber cut is detected at any position in the ring. The resulting architecture is shown in Fig 2. The distribution node is explained in detail in Fig. 4, and two exemplary variants of switches are explained in detail in Figures 6 and 7, respectively.

A prior art wavelength selective ROADM based Metro ring may be replaced by a wavelength agnostic structure. Thus, every wavelength reaches every node on the ring and consequently any potential add- and drop-node in the ring, which is in principle similar to a broadcast mechanism. This is an essential difference to the prior art ROADM based fiber rings, where nodes are wavelengths selective: according to the invention, add-/drop fiber ring nodes no longer limit the number of wavelengths used on the ring, making e.g. ultra-dense WDM technologies an option. In addition, no centralized and real-time configuration management of the fiber ring is required.

The fiber separating switch in Fig 2 ensures that the structure remains a topological bus at all times, preventing that a wavelength circles the ring from both sides and causes interferences. In case of a fiber cut, the switch is closed automatically, thus re-creating the topological bus structure again.

As all network nodes are wavelength agnostic, all wavelengths signals generated in any of the feeder sections are coupled into the ring via add-/drop nodes in both directions and therefore distributed to all other add-/drop ring nodes within the ring and to the feeder sections too. The receivers at the feeder sections therefore have to be wavelength selective. In order to make use of the wavelength flexibility afforded by the invention, it is envisaged that tunable receivers are employed. This can be achieved either through tunable filters or by coherent detection.

Fig 4 shows the structure of add-/drop network ring nodes depicted in the generic architecture (Fig 2). It consists of three passive, wavelength agnostic power splitters. The feeder fiber for adding traffic is split by a 50:50 passive splitter into a first and a second feeder fiber, the first and the second feeder fiber being connected to the ring fiber in both directions by asymmetric splitters with a split ratio of $\eta{:}(1-\eta)$. In a typical embodiment, the constant $\eta$ could have a value within the range of 0.9 to 0.95. With this configuration, the power which is coupled into the feeder fiber from the ring is $\frac{1}{2}*(1-\eta)$.

The architecture according to the presented invention does not contain any amplifying devices, therefore the add-/ drop ring network nodes cause a certain loss at each step. After passing n intermediate distribution nodes, the light which is sent from one feeder fiber and received by another one is attenuated by the factor A: $A = \eta^{2n} * (1-\eta)^2 * 0.5^2$. Additional attenuation is inserted due to the fiber loss. Therefore, the attenuation of such a metro ring can be relatively high, and optical receivers with high sensitivity have to be used in the feeder sections. When a technology with high sensitivity such as coherent detection is employed, typical ring structures with n=12 and ~40 km ring length can be covered without amplification.

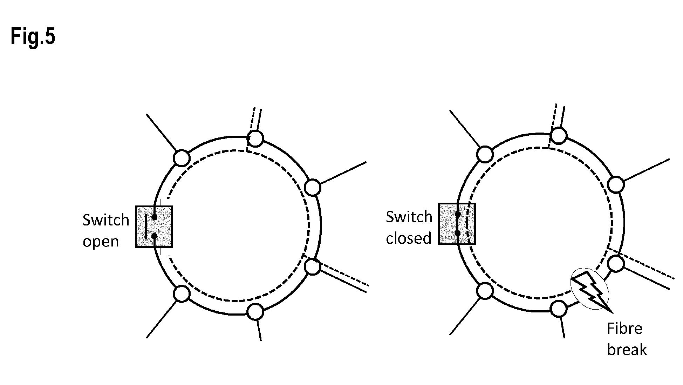

Due to the transparent characteristics of the ring all wavelengths which are fed into the ring are passed to all other ring nodes, that is to all add-/drop ring nodes and connected feeder sections. A wavelength selective receiver in the feeder section, e.g. a coherent receiver, may select arbitrary wavelengths it intends to receive. As such, point to point as well as broadcast transmissions from feeder section to feeder section is possible. With this architecture, full flexibility is reached, because at each node an arbitrary number of signals, having different wavelengths, may be fed into the fiber ring and distributed to all other nodes within the fiber ring. The network separating switch as depicted in Fig 2 is required to transform a geometrical ring structure into a topological bus structure, i.e. in order to intentionally interrupt the ring at one point, so that interference due to different path length does not distort the signals. The protection against fiber cuts offered by prior art fiber rings is achieved according to this invention by simply closing the switch in case of a fiber cut. The fiber interruption appears at the position of the fiber cut, and the topological bus structure is re-installed. This is shown in Fig. 5. It is an advantage, that no additional network management measures are necessary in case of a fiber break to handle capacity problems due to signal redirection or conflicts arising from the fact, that in case of signal redirection conflicts will arise with other signals having the equal wavelength.

The fiber ring separating switch has to detect a fiber cut and to close the optical link immediately as soon as a fiber cut is detected. There are several ways to detect a fiber cut. A simple and easy to implement embodiment is shown in Fig. 6. The switch sends light into the ring on an unused wavelength. This light is a continuous wave, apart from a slight modulation with a sine wave with a low frequency $f_{pilot}$ also called a pilot tone. The frequency of the pilot tone could be in the range of 10-100 kHz. The pilot tone is detected at the other side of the ring by slow photodiodes which detect the full optical power on the ring. No spectral filtering in employed. After travelling around the ring, the intensity of the pilot tone will be weak, but by means of lock-in detection the pilot tone can be precisely detected. This lock-in detection is performed by multiplying the received signal from the photodiode $I_{PD}$ with the sent pilot tone and integrating this product over a certain time.

$$L = abs(\int_{t_1}^{t_2} I_{PD} * e^{2\pi i f_{pilot} * t} dt).$$

Due to the integration, all noise components cancel and only the component at the frequency of the pilot tone remains. In case the pilot tone vanishes, L goes to zero; this means that a fiber cut happened and the ring separating switch closes.

Another realization of a fiber cut detection unit is shown in Fig. 7. Here, some of the signals from both directions of the ring are spectrally de-multiplexed in a frequency selective device, e.g. an Arrayed Waveguide Grating (AWG). Each wavelength is then detected by its own photodiode $PD_{i,\{W,E\}}$ and a following decision circuit determines whether light is arriving at the respective photodiode, i.e. whether a photocurrent is present or not. If, for one or many wavelengths, a photocurrent is present only for one of the directions, than a fiber cut happened and the logic XOR and OR gates, as shown in Fig. 7, trigger the switching event.

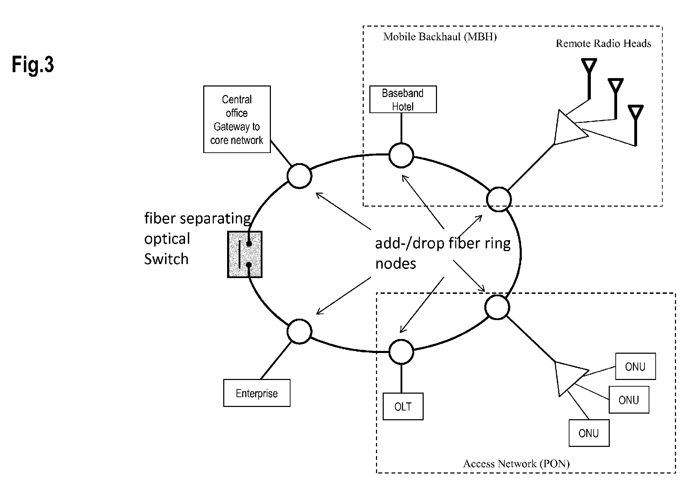

Apart from cost reduction and simplified management, another motivation for this invention is the more flexible service delivery it offers. This is illustrated in Fig 3, showing a full access-metro constellation. With the new architecture, different services can be addressed by dedicated wavelength, making intermediate aggregation and OEO-conversion unnecessary. One use case would be mobile backhaul services, where base stations can have dedicated wavelength with which they communicate to their mobile head-end. Another use case is enterprise users, where a dedicated wavelength without intermediate OEO conversion can be a security feature. Residential users can still be served in the classical manner through a passive optical access network, which is connected to the ring via an aggregation device.

The next section enumerates further differences between the prior-art metropolitan fiber rings and the inventive passive fiber ring architecture:

- Each wavelength is broadcast to each add-/drop node attached to the ring. In contrast to prior art metropolitan fiber rings, these add-/drop fiber ring nodes are not wavelength selective, but the receivers on the feeder fibers are wavelength selective. Additionally, interference is avoided through the topology by a ring separating switch, and no special configuration is required.
- The fiber is used bi-directionally.
- The architecture needs to have only a single fiber.
- The proposed architecture allows the realization of a metropolitan fiber optical ring for a much lower price as conventional architectures, by employing only passive components (except the ring separating switch). No power supply for the remaining add-/drop fiber ring nodes is required.
- As wavelength selection is performed autonomously in the feeder sections, the management of the ring architecture is much simplified. If required for security reasons, filters can be added in the feeder sections.
- By using coherent detection, the increased loss can be compensated.
- In principle, receivers on a feeder fiber can switch between wavelengths, provided they have tuning capabilities. This flexibility requires no configuration management on the ring and does not exist in the classical case.
- While wavelength reuse is not possible, the splitter based architecture does not restrict the number of wavelengths used on the ring. This adds a lot of flexibility. The increased number of wavelengths has no impact on distribution node configuration and cost.
- In case of a fiber cut, protection switching can be done autonomous with a very quick response time and has no impact on node configuration or needs any centralized network management measures for protection.
- The ring architecture described herein offers totally new service delivery capabilities, making use of the increased receiver sensitivity (coherent detection) and tunability available with new WDM technologies.

**Claims**

1.  An optical fiber ring having a plurality of passive ring nodes and an active ring node with a switch to separate or close the fiber ring,
    wherein the passive ring nodes are configured to connect an optical feeder section to each direction of the fiber ring,
    wherein arbitrary wavelengths signals generated in a feeder section can be distributed to all other ring nodes and feeder sections,
    wherein receivers in the feeder sections are configured to select an arbitrary number of wavelength signals in receiving direction.

2.  An optical fiber ring according to claim 1,
    wherein the active ring node is configured to detect a fiber break within the ring and to close the fiber ring in case of a fiber break autonomously without the support of an external or centralized management system.

3. A method for distributing an arbitrary number of wavelength signals within an optical fiber ring, the fiber ring comprising a plurality of passive ring nodes and an active ring node, the active ring node comprising a switch configured to separate or to close the fiber ring, and wherein the passive ring nodes are configured to connect an optical feeder section to each direction of the fiber ring, the method comprising the steps of generating an arbitrary number of wavelength signals in a feeder section for distribution these signals into the ring and receiving and selecting an arbitrary number of wavelength signals in a feeder section.

# Fig.1

# Fig.2

**Fig.3**

Mobile Backhaul (MBH)

Remote Radio Heads

Central office Gateway to core network

Baseband Hotel

fiber separating optical Switch

add-/drop fiber ring nodes

Enterprise

OLT

ONU

ONU

ONU

Access Network (PON)

# Fig.4

**Fig.5**

Switch open

Switch closed

Fibre break

# Fig.6

**Fig.7**

Europäisches
Patentamt

European
Patent Office

Office européen
des brevets

# EUROPEAN SEARCH REPORT

Application Number

EP 12 17 6394

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOHANSSON B S ET AL: "Flexible bus: A self-restoring optical ADM ring architecture", ELECTRONICS LETTERS, IEE STEVENAGE, GB, vol. 32, no. 25, 5 December 1996 (1996-12-05), pages 2338-2339, XP006006086, ISSN: 0013-5194, DOI: 10.1049/EL:19961591 * the whole document * | 1-3 | INV. H04J14/02 |
| X | ITO K ET AL: "Bidirectional fibre optic loop-structured network", ELECTRONICS LETTERS, IEE STEVENAGE, GB, vol. 17, no. 2, 22 January 1981 (1981-01-22), pages 84-86, XP002502852, ISSN: 0013-5194, DOI: 10.1049/EL:19810061 * the whole document * | 1-3 | |
| X | WO 96/32787 A1 (ERICSSON TELEFON AB L M [SE]) 17 October 1996 (1996-10-17) * page 4, line 15 - page 7, line 17 * * page 8, line 4 - page 15, line 6; figures 1a,1b,2a,2b,2c,2d * | 1-3 | TECHNICAL FIELDS SEARCHED (IPC) H04J |
| X | WO 99/65165 A1 (ERICSSON TELEFON AB L M [SE]) 16 December 1999 (1999-12-16) * page 1, line 4 - line 5 * * page 1, line 23 - page 2, line 30 * * page 4, line 5 - page 6, line 4; figure 1 * | 1-3 | |
| A | EP 1 331 748 A2 (CIT ALCATEL [FR] ALCATEL LUCENT [FR]) 30 July 2003 (2003-07-30) * paragraph [0001] * * paragraph [0025] - paragraph [0054]; figures 1,2,3,4,5,6 * | 1-3 | |

The present search report has been drawn up for all claims

| Place of search | Date of completion of the search | Examiner |
|---|---|---|
| The Hague | 12 December 2012 | Roldán Andrade, J |

**ANNEX TO THE EUROPEAN SEARCH REPORT
ON EUROPEAN PATENT APPLICATION NO.**
EP 12 17 6394

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2012

| Patent document cited in search report | | | Publication date | Patent family member(s) | | | Publication date |
|---|---|---|---|---|---|---|---|
| WO 9632787 | A1 | | 17-10-1996 | AU | 705856 | B2 | 03-06-1999 |
| | | | | AU | 5351296 | A | 30-10-1996 |
| | | | | BR | 9604930 | A | 09-06-1998 |
| | | | | CN | 1186577 | A | 01-07-1998 |
| | | | | DE | 69605542 | D1 | 13-01-2000 |
| | | | | DE | 69605542 | T2 | 06-04-2000 |
| | | | | DK | 820666 | T3 | 10-07-2000 |
| | | | | EP | 0820666 | A1 | 28-01-1998 |
| | | | | ES | 2140839 | T3 | 01-03-2000 |
| | | | | GR | 3032595 | T3 | 31-05-2000 |
| | | | | JP | 4043048 | B2 | 06-02-2008 |
| | | | | JP | 4336377 | B2 | 30-09-2009 |
| | | | | JP | H11503584 | A | 26-03-1999 |
| | | | | JP | 2007329968 | A | 20-12-2007 |
| | | | | NO | 974664 | A | 25-11-1997 |
| | | | | US | 5680235 | A | 21-10-1997 |
| | | | | WO | 9632787 | A1 | 17-10-1996 |
| WO 9965165 | A1 | | 16-12-1999 | AT | 322772 | T | 15-04-2006 |
| | | | | AU | 4669599 | A | 30-12-1999 |
| | | | | EP | 1088410 | A1 | 04-04-2001 |
| | | | | SE | 520876 | C2 | 09-09-2003 |
| | | | | SE | 9802071 | A | 10-02-2000 |
| | | | | US | 6525852 | B1 | 25-02-2003 |
| | | | | WO | 9965165 | A1 | 16-12-1999 |
| EP 1331748 | A2 | | 30-07-2003 | CN | 1620773 | A | 25-05-2005 |
| | | | | EP | 1331748 | A2 | 30-07-2003 |
| | | | | FR | 2835134 | A1 | 25-07-2003 |
| | | | | JP | 2005516468 | A | 02-06-2005 |
| | | | | US | 2005123292 | A1 | 09-06-2005 |
| | | | | WO | 03063400 | A2 | 31-07-2003 |

EPO FORM P0459

For more details about this annex : see Official Journal of the European Patent Office, No. 12/82